# EUROPÄISCHE PATENTSCHRIFT

(11) **EP 2 637 954 B1**
(45) Veröffentlichungstag und Bekanntmachung des Hinweises auf die Patenterteilung: **25.06.2014**
(21) Anmeldenummer: 11782594.3
(22) Anmeldetag: 09.11.2011
(51) Int. Cl.: B65G 63/00, G05D 1/00, B60P 1/64, B65G 67/02

(54) **SYSTEM FÜR DEN UMSCHLAG VON CONTAINERN**
HANDLING SYSTEM FOR CONTAINERS
SYSTÈME DE TRANSFERT DE CONTENEURS

(30) Priorität: 11.11.2010 DE 102010060504
(43) Veröffentlichungstag der Anmeldung: 18.09.2013
(60) Teilanmeldung: 13163762.1
(73) Patentinhaber: Gottwald Port Technology GmbH, 40597 Düsseldorf (DE)
(72) Erfinder: FRANZEN, Hermann, 41238 Mönchengladbach (DE); WIESCHEMANN, Armin, 46119 Oberhausen (DE); MOUTSOKAPAS, Jannis, 40789 Monheim (DE)
(74) Vertreter: Moser, Jörg Michael
(86) Internationale Anmeldenummer: PCT/EP2011/069750
(87) Internationale Veröffentlichungsnummer: WO 2012/062807

(56) Entgegenhaltungen:
- EP-A2- 2 060 472
- EP-A2- 2 119 663
- CN-U- 201 619 572
- CN-U- 201 619 620
- DE-A1- 10 116 927
- DE-A1-102007 039 778
- US-A- 3 474 877
- US-A- 3 669 206
- US-A- 4 162 869
- US-A- 4 215 759
- US-A- 4 361 202
- US-A- 6 129 026
- US-A1- 2005 131 645

## Beschreibung

Die Erfindung betrifft ein System für den Umschlag von Containern, in dem flurgebundene, gummibereifte und fahrerlose Containertransportfahrzeuge und flurgebundene, gummibereifte und bemannte Containertransportfahrzeuge eingesetzt sind, die Container zwischen Containerbrücken und einem Containerlager transportieren.

Systeme für den Umschlag, also das Be- und Entladen von Fahrzeugen, Schiffen und Eisenbahnen sowie der Speicherung von Containern sind bekannt.

In den bekannten Systemen werden für die Containerhandhabung und den Containertransport einerseits bemannte Einrichtungen und Transportfahrzeuge und andererseits fahrerlose beziehungsweise mannlose Einrichtungen und Transportfahrzeuge, beispielsweise so genannte Automated Guided Vehicles (AGVs), eingesetzt Unter bemannten Einnchtungen oder Transportfahrzeugen werden hierbei solche verstanden, die von mitfahrenden Fahrern beziehungsweise Fahrzeugführem aktiv gesteuert werden. Im Gegensatz dazu werden fahrerlose beziehungsweise mannlose Einrichtungen oder Transportfahrzeuge in einem Automatik-Betrieb ohne aktives Einwirken eines Fahrers gesteuert. "Mannlos" beziehungsweise "fahrerlos" bezieht sich lediglich auf das tatsächliche Eingreifen eines Fahrers in den Steuerungsvorgang In diesem Sinne kann ein mannloser Automatik-Betrieb einer entsprechenden Einrichtung oder eines Transportfahrzeugs auch dann gegeben sein, wenn ein Fahrer mitfährt, hierbei jedoch nicht aktiv in die Steuerung eingreift

So ist aus der EP 0 302 569 B1 ein Speicher- und Überfuhrungssystem für Container, umfassend ein Kai mit Kaikränen zum Be- und Entladen von Container-Schiffen, die an dem genannten Kai festgemacht sind, ein Container-Speicherdepot, das mit einer Gruppe von Portalkran-Laufbahnen versehen ist, die nebeneinander angeordnet sind, eine Anzahl von nicht auf Schienen geführten Fahrzeugen für den Transport von Containern zwischen den Kaikränen und den Portalkränen, und Mittel für die automatische Steuerung der Fahrzeuge bekannt Die Mittel für die automatische beziehungsweise fahrerlose Steuerung der Fahrzeuge umfassen ein frei programmierbares Wegewählsystem, das in der Lage ist, jedes Fahrzeug entlang vorprogrammierter Positionen in dem Kaibereich ohne Führungsbahnen zu führen.

Jedes Fahrzeug ist mit einer Namgationseinrichtung zur Bestimmung des einzuschlagenden Weges und zum Vergleich desselben mit dem Sollweg versehen, das ein Bezugsgitter von Transpondem und/oder Induktionsdrähten in, auf oder unter der Straßendecke des Kaibereichs angeordnet ist, und jedes Fahrzeug ist mit einer oder mehreren Sender-Empfänger-Einheiten versehen, die durch gegenseitige Beeinflussung mit dem genannten Bezugsgitter die Position des Fahrzeugs bestimmen, um Signale zu der Steuervorrichtung des Fahrzeugs zwecks Korrektur der Fahrzeugposition zu übermitteln.

Diese sogenannten fahrerlosen Transportfahrzeuge beziehungsweise AGVs sind flurgebundene und gummibereifte Fördermittel mit eigenem Fahrantrieb, die automatisch, also ohne mitfahrenden Fahrer beziehungsweise Fahrzeugführer, gesteuert und berührungslos geführt werden Diese sind zum Beispiel in der VDI Richtlinie 2510 definiert.

Entsprechende Fahrzeuge sind auch aus der DE 10 2007 039 778 A1 bekannt, aus der ein flurgebundenes Transportfahrzeug für den Transport von Containern mit mindestens einer auf einem Fahrzeugrahmen des Transportfahrzeuges angeordneten Hubplattform, die aus einer abgesenkten Transportstellung über einen Hubantrieb in eine angehobene Ubergabestellung anhebbar beziehungsweise umgekehrt absenkbar ist, hervorgeht Die Hubplattform ist über mindestens einen Kniehebel auf dem Fahrzeugrahmen befestigt, wobei die Hubplattform über den mindestens einen Kniehebel anhebbar beziehungsweise absenkbar ist und der Hubantrieb auf den mindestens einen Kniehebel wirkt und die Hubplattform für die Hub- und Senkbewegung an dem Transportfahrzeug führt.

Aus der DE 196 13 386 A1 ist ein Gegengewichtsgabelstapler bekannt, der wahlweise bemannt oder fahrerlos betreibbar und mit einer Gabel zur Handhabung von Paletten und darauf befindlichen Lasten versehen ist. Das Flurförderzeug ist für den fahrerlosen Automatik-Betrieb mit einem in Wirkverbindung mit dem Fahrantrieb und/oder der Lenkung und/oder der Bremsanlage und/oder der Bewegungssteuerung der Gabel bringbaren Kontrollsystem ausgestattet. Ferner umfasst das Fahrzeug Mittel zum Eingeben und Speichern von möglichen Fahrtrouten und einer Transportaufgabe, Mittel zum autonomen Bestimmen der Fahrzeugposition im Raum, Mittel zur Steuerung der Bewegung des Fahrzeugs in Abhängigkeit von dessen Position im Raum und von der vorgegebenen Transportaufgabe, Mittel zum Erkennen des Vorhandenseins, der Position und der Ausrichtung einer Palette, Mittel zur Steuerung der Bewegung der Gabel und/oder des Fahrzeugs in Abhängigkeit von der Position, der Ausrichtung der Palette und der Transportaufgabe und Mittel zum Abbremsen des Fahrzeugs beim Vorhandensein von Hindernissen.

Aus der Patentanmeldung US 6 129 026 A ist ein System zum Umschlagen von Luftfracht in einem Flughafenbereich zwischen Gepäckaufgabestationen beziehungsweise Gepäckannahmestationen und wartenden Flugzeugen bekannt. Für diesen Umschlag werden Transportfahrzeuge verwendet, die in einem Mischbetrieb arbeiten und hierbei zwischen einem von einem Fahrer gesteuerten bemannten Betrieb und einem fahrerlosen Automatik-Betrieb wechseln. Die Transportfahrzeuge werden in einem Teilbereich des Vorfeldes und auf dem Weg zu den Gepäckaufgabestationen beziehungsweise Gepäckabgabestationen entlang von Stromschienen automatisch und fahrerlos verfahren. Da die Positionen der wartenden Flugzeuge nie identisch sind, werden die Transportfahrzeuge bei der Anfahrt im Bereich der Flugzeuge von einem Fahrer gesteuert.

Aus der deutschen Gebrauchsmusterschrift DE 20 2007 016 156 U1 sind Portalhubwagen, so genannte Straddle Carrier, bekannt, die beim Transportieren und Stapeln von Containern ebenfalls in einem Mischbetrieb arbeiten. Hierbei wird der Straddle Carrier bemannt an einen Containerstapel herangefahren. Das Einfädeln des Straddle Carriers zur Aufnahme beziehungsweise Abgabe von Containern oberhalb des obersten Containers eines Containerstapels erfolgt über eine vom Fahrer aktivierbare automatische Lenkung mit einem Laserscanner.

Aus der Patentschrift US 3 669 206 A ist ein System für den Umschlag von Containern bekannt. Das System umfasst Containertransportfahrzeuge die Container zwischen Containerbrücken und einem Containerlager transportieren. Die Containertransportfahrzeuge können hierbei automatisch entlang eines in der Fahrbahn eingelassenen Kabels verfahren werden. Auch können die Containertransportfahrzeuge alternativ manuell von einem Fahrer verfahren werden.

Der Erfindung liegt die Aufgabe zugrunde, ein verbessertes System für den Umschlag von Containern zu schaffen.

Diese Aufgabe wird durch ein System für den Umschlag von Containern mit den Merkmalen des Anspruchs 1 gelöst Vorteilhafte Ausgestaltungen der Erfindung sind in den Unteransprüchen 2 bis 11 angegeben.

Erfindungsgemäß wird ein System für den Umschlag von Containern, in dem flurgebundene, gummibereifte und fahrerlose Containertransportfahrzeuge und flurgebundene, gummibereifte und bemannte Containertransportfahrzeuge eingesetzt sind, die Container zwischen Containerbrücken und einem Containerlager transportieren, dadurch verbessert, dass mindestens ein Manuell-Bereich vorgesehen ist, in dem nur flurgebundene, gummibereifte und bemannte Containertransportfahrzeuge eingesetzt sind, dass mindestens ein Automatik-Bereich vorgesehen ist, in dem nur flurgebundene, gummibereifte und fahrerlose Containertransportfahrzeuge eingesetzt sind, wobei jedes der Containertransportfahrzeuge wahlweise fahrerlos oder bemannt betreibbar ist und somit wahlweise in dem Automatik-Bereich oder dem Manuell-Bereich verfahrbar ist, sowie der Automatik-Bereich und der Manuell-Bereich örtlich voneinander getrennt sind. Dadurch wird ein Umladen der Container an Schnittstellen zwischen einem Automatik-Bereich und einem Manuell-Bereich unnötig. Es muss lediglich ein Fahrer zusteigen oder aussteigen beziehungsweise gegebenenfalls untätig sitzenbleiben, wenn dies den Sicherheitsvorschriften genügt

Ein wesentlicher Vorteil besteht außerdem darin, dass die Herstellung eines vollständig fahrerlosen Automatik-Betriebs des gesamten Systems schrittweise erfolgen kann, indem nach und nach der Manuell-Bereich verkleinert und der Automatik-Bereich vergrößert wird, wobei dementsprechend nach und nach samtliche zunächst noch von Fahrern aktiv gesteuerten Containertransportfahrzeuge auf einen automatischen, fahrerlosen Betrieb umgestellt werden Denkbar ist hierbei auch, dass ein Fahrer während des fahrerlosen Betriebs zwar noch auf dem Containertransportfahrzeug mitfährt, jedoch hierbei nur passiv eine Überwachungsfunktion ausübt und nur in Not- beziehungsweise Störfällen aktiv in die ansonsten automatisiert erfolgende Fahrzeugsteuerung eingreift.

Des Weiteren ist ein Ausfall der automatischen und fahrerlosen Steuerung beziehungsweise der Leitzentrale der im fahrerlosen Betrieb automatisierten Containertransportfahrzeuge nicht so problematisch wie bisher, da lediglich ein Fahrer in das entsprechende Containertransportfahrzeug einsteigen und dieses so lange aktiv steuern muss, bis die Reparatur erfolgt ist. Auch im umgekehrten Fall eines Ausfalls eines Fahrers bietet ein solches System in vorteilhafter Weise Flexibilität, da der Betrieb des Containertransportfahrzeugs auf fahrerlosen Automatik-Betrieb umgestellt werden kann.

In vorteilhafter Weise ist außerdem vorgesehen, dass der Automatik-Bereich gegen den Zutritt von Personen geschützt ist.

In konstruktiv einfacher Weise ist vorgesehen, dass zwischen dem Automatik-Bereich und dem Manuell-Bereich eine Sicherheitsschleuse angeordnet ist, um ein Einfahren von Fahrern mit Containertransportfahrzeugen aus dem Manuell-Bereich in den Automatik-Bereich zu verhindern.

Das System wird weiter dadurch verbessert, dass in dem Automatik-Bereich und dem Manuell-Bereich jeweils Containertransporteinrichtungen eingesetzt sind, die im Bereich der Containerbrücken und/oder des Containerlagers zum Be- und Entladen der Containertransportfahrzeuge Container aufnehmen und abgeben.

In besonders vorteilhafter Weise ist hierbei vorgesehen, dass jede der Containertransporteinrichtungen wahlweise fahrerlos oder bemannt betreibbar ist.

Der Automatisierungsgrad eines entsprechenden Systems lässt sich in vorteilhafter Weise noch weiter dadurch erhöhen, dass im Bereich der Containerbrücken und/oder des Containerlagers die Container selbsttätig von den Containertransportfahrzeugen aufnehmbar und abgebbar sind.

Vorzugsweise sind die flurgebundenen Containertransportfahrzeuge AGVs, die mittels einer Hilfseinrichtung bemannt betreibbar sind.

Insbesondere umfasst die Hilfseinrichtung eine Fahrerkabine, die mit einem Kontrollsystem für die Lenkung, die Bewegungssteuerung und das Bremsen im bemannten Betrieb versehen Ist.

Sinnvollerweise ist die Hilfseinrichtung über eine Sicherheitsschaftung aktivierbar, so dass im bemannten Betrieb die Steuerungsübernahme durch einen Fahrer gezielt und nicht aus Versehen erfolgt.

In der bevorzugten Ausführungsform ist die Fahrerkabine an der vorderen Stirnseite des flurgebundenen Containertransportfahrzeugs lösbar befestigt Sie ist also als Zusatzkomponente ausgeführt, die vorne an einem Containertransportfahrzeug oder AGV angeflanscht wird.

Die Fahrerkabine sollte dabei eine erhöhte Position einnehmen und dem Fahrer einen guten Überblickt erlauben. Zudem ist eine Ausstattung mit passiven Sicherheitselementen zum Schutz der Fahrerkabine und des darin befindlichen Fahrers, wie einem Bugelsystem nach Art eines Überrollschutzes vorgesehen

Ein Überrollschutz (Roll Over Protective Structure, kurz ROPS) ist ein Schutzaufbau für Fahrerkabinen Dieser besteht aus zusätzlichen, aussteifenden Rahmen- und Gitterelementen, die in die Konstruktion der Fahrerkabine eingebaut werden. Im Fall eines so genannten Sonderereignisses, wie etwa Umkippen oder Uberschlag, verhindert die Konstruktion ein übermäßiges Verformen der Fahrerkabine. Der Fuhrer wird vor Verletzungen geschützt, da der Überlebensraum (so genanntes Deflection-Limiting-Volume, kurz DLV) gesichert wird Eine Möglichkeit den Schutzaufbau zu erweitern, stellt eine Ergänzung durch einen ROPS-Schutzaufbau dar. In diesem Fall ist die Fahrerkabine auch vor herabfallenden Gegenständen geschützt

Damit das Kontrollsystem, das für den bemannten Betrieb zur aktiven Steuerung des Containertransportfahrzeugs durch einen Fahrer aus der Fahrerkabine heraus vorgesehen ist, auf das Containertransportfahrzeug einwirken kann, weist das Kontrollsystem eine Schnittstelle für den Anschluss an die Fahrzeugsteuerung des AGVs auf und das Kontrollsystem ist ausgestaltet, um nach der Aktivierung in die Fahrzeugsteuerung des AGVs einzugreifen und diese zu übernehmen. Im einfachsten Fall kann die Fahrerkabine so per steckbarer Kabelverbindung an das Containertransportfahrzeug angeschlossen werden

Weitere Einzelheiten, Merkmale und Vorteile der Erfindung ergeben sich aus der nachfolgenden Beschreibung eines Ausführungsbeispiels anhand der Zeichnung, in der
Figur 1 eine Draufsicht auf eine schematische Darstellung eines Systems für den Umschlag von Containern in einem Hafen und
Figur 2eine perspektivische Ansicht eines wahlweise automatisch oder manuell betreibbaren Containertransportfahrzeugs

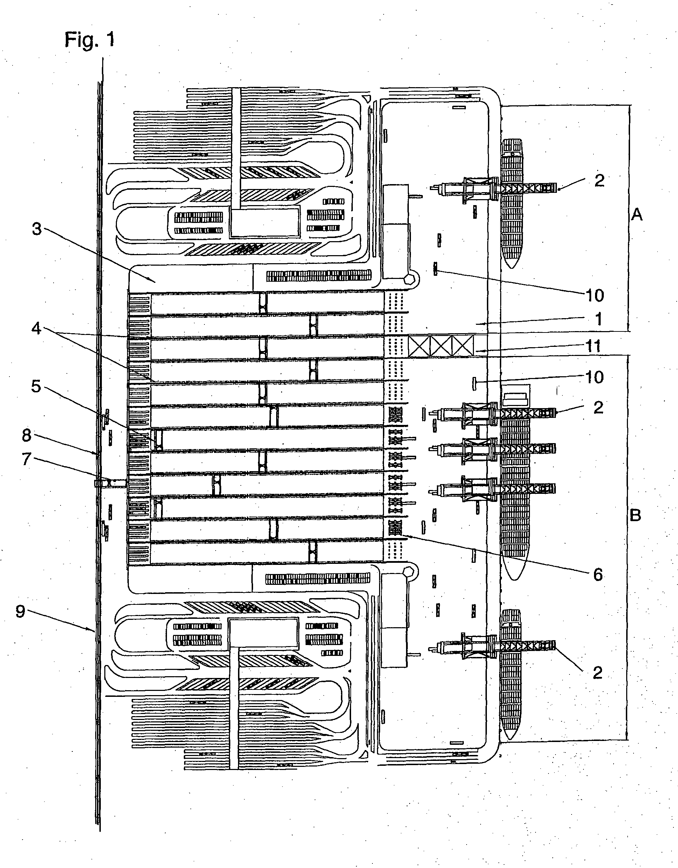

Figur 1 zeigt eine Draufsicht auf eine schematische Darstellung eines Systems für den Umschlag von Containern in einem Hafen mit einem Kai 1, an dem Schiffe für die Be- und Entladung anlegen.

Dazu sind mehrere Containerbrücken 2 vorgesehen, die mit ihren Auslegern einerseits die Schiffe und andererseits den Kai 1 überstrecken

Das System umfasst ferner ein Containerlager 3 bekannter Art mit einer Vielzahl von Lagergassen 4, die jeweils von einem oder mehreren ersten Portalkranen 5 bedient werden, die auf entlang der Lagergassen 4 verlaufenden Schienenwegen verfahrbar sind.

Auf der dem Kai 1 zugewandten Seite des Containerlager 3 sind vor jeder Lagergasse 4 Ubergabeplätze 6 angeordnet, an denen Container abgestellt werden, um in das Containerlager 3 eingelagert oder ausgelagert zu werden.

Auf der von dem Kai 1 abgewandten landseitigen Seite des Containerlagers 3 ist ein LKW- und/oder Eisenbahn-Übergabebereich angeordnet. Hier können LKW und Wagons mit Containern be- und entladen werden, die entweder aus dem Containerlager 3 ausgelagert oder in die Containerlager 3 engelagert werden.

Hierzu umfasst der landseitige Übergabebereich mehrere zweite Portalkrane 7 mit drehbaren Hubwerken für die Be- und Entladung der LKW auf Übergabeplätzen 8 oder Eisenbahnwagons auf einer Schienenstrecke 9

Auf dem Kai 1 werden die von den Schiffen abgeladenen Container von den Containerbrücken 2 entweder abgelegt oder die Container für die Beladung der Schiffe aufgenommen.

Der Containertransport auf dem Kai 1 findet mit flurgebundenen Containertransportfahrzeugen 10 statt, die üblicherweise mit Luft befüllte Gummireifen aufweisen und hierüber frei und insbesondere nicht schienengebunden verfahrbar sind.

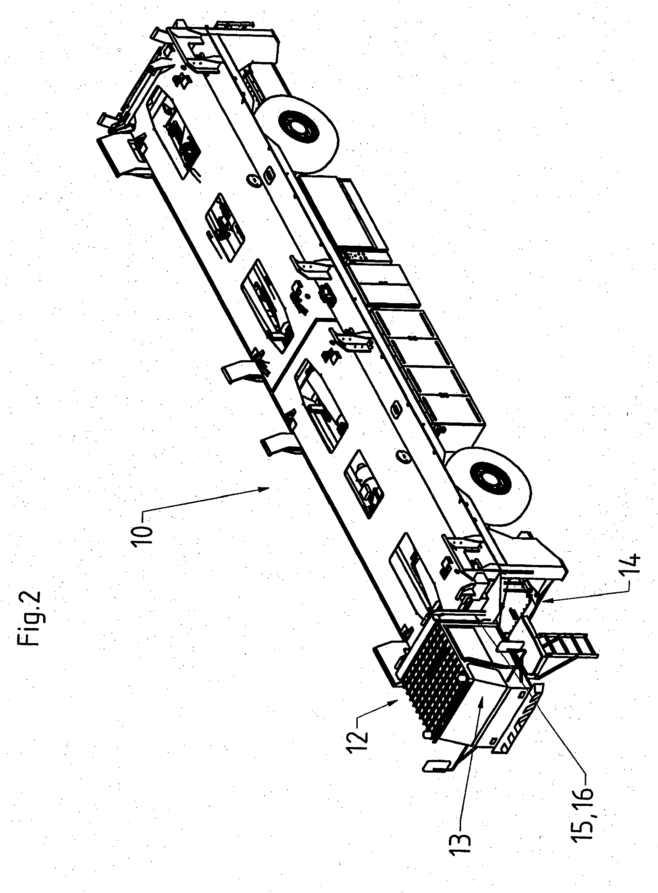

Hierbei handelt es sich üblicherweise um automatisierte und somit fahrerlos betreibbare Transportfahrzeuge, also AGVs Auch das in Figur 2 abgebildete Containertransportfahrzeug 10 ist als AGV ausgebildet und weist nach Art eines Pntschenwagens zwei voneinander getrennte und hintereinander angeordnete Ladeflächen zum Abstellen von jeweils einem Container auf. Alternativ können die Ladeflächen über Hubvorrichtungen heb- und senkbar ausgebildet sein Entsprechende AGVs beziehungsweise Containertransportfahrzeuge 10 können selbstverständlich ebenso als Portalhubwagenbeziehungsweise Straddle Carrier ausgebildet sein und somit auch zum Stapeln von Containern geeignet sein.

Der Kai 1 ist in mindestens einen Automatik-Bereich A für den Containertransport, in dem fahrerlose Containertransportennchtungen, das heißt als AGV ausgebildete Containertransportfahrzeuge 10 wie beispielsweise Straddle Carrier, eingesetzt sind, und in mindestens einen Manuell-Bereich B für den Containertransport, in dem bemannte Containertransporteinrichtungen eingesetzt sind, aufgeteilt.

Erfindungsgemäß sind die Containertransportfahrzeuge 10 außer in einem fahrerlosen Automatik-Betrieb wahlweise auch bemannt betreibbar Dadurch können die Containertransportfahrzeuge 10 sowohl als mannlose Containertransporteinrichtungen ohne Fahrer im Automatik-Bereich A als auch als bemannte Containertransporteinrichtungen mit Fahrer im Manuell-Bereich B verwendet werden

Aus Sicherheitsgründen ist der Automatik-Bereich A gegen den Zutritt von Personen geschützt, zum Beispiel durch einen Zaun und elektronische Zugangssperren an den Zugängen.

Dementsprechend sind auch der Automatik-Bereich A und der Manuell-Bereich B durch eine Sicherheitsschleuse 11 getrennt

Die Sicherheitsschleuse 11 verhindert einen ungewollten Zutritt von Personen beziehungsweise Fahrern und auch das Hinüberfahren von Containertransportfahrzeugen 10 von dem Manuell-Bereich B in den Automatik-Bereich A und umgekehrt.

Es versteht sich, dass der gewollte und beabsichtigte und erlaubte Zutritt oder das Hinüberfahren in den jeweils anderen Bereich unter gewissen Umständen möglich ist.

Solche Umstände wären zum Beispiel der beabsichtigte Zutritt von Wartungspersonal für eine Reparatur in den Automatik-Bereich A oder auch das gewollte Hinüberfahren eines Containertransportfahrzeugs 10 Dies ist unter Einhaltung von Sicherheitsmaßnahmen möglich, wie zum Beispiel ein Ausstieg des Fahrers und sein Verlassen der Sicherheitsschleuse 11 beim Hinüberfahren des Containertransportfahrzeugs 10 in den Automatik-Bereich A sowie gegebenenfalls elektronische Quittierung etc.

Um dies zu ermöglichen, sind die grundsätzlich als AGV ausgebildeten Containertransportfahrzeuge 10 bei Bedarf und/oder ständig mit einer Hilfseinrichtung ausstattbar, die den bemannten Betrieb und insbesondere die Steuerung durch einen Fahrer erlaubt

Die Hilfseinrichtung umfasst im Wesentlichen eine Fahrerkabine 12, die mit einem Kontrollsystem 13 für den bemannten Betrieb des Containertransportfahrzeugs 10 und hierbei insbesondere für die Lenkung, die Bewegungssteuerung und das Bremsen durch einen Fahrer versehen ist. Solche Kontrollsysteme an sich sind von ausschließlich mit einem Fahrer bemannt betreibbaren Containertransportfahrzeugen bekannt.

Die Aktrvierung der Hilfseinrichtung beziehungsweise die Übernahme der Kontrolle des Containertransportfahrzeugs 10 durch das Kontrollsystem 13 und den Fahrer im bemannten Betrieb erfolgt über eine Sicherheitsschaltung nach zweifacher Quittierung. Somit ist ein unbeabsichtigtes Ein- und Ausschalten des Automatik-Betnebs beziehungsweise des bemannten Betnebs der Containertransportfahrzeuge 10 verhindert

Das Kontrollsystem 13 ist dann so ausgestaltet, dass nach der Aktivierung in die Fahrzeugsteuerung eines bis dahin automatisch beziehungsweise fahrerlos betriebenen Containertransportfahrzeugs 10 eingegriffen und von dem Fahrer übernommen wird.

Die Fahrerkabine 12 ist am vorderen Ende 14 des Containertransportfahrzeugs 10 in einer erhöhten Position lösbar angeordnet, das heißt sie kann von dem Containertransportfahrzeug 10 abgenommen werden, da sie lediglich durch entfernbare Halterungen, zum Beispiel Bolzen, und elektrisch oder durch andere Energie- und Signalübertragungseinrichtungen mit diesem verbunden ist

Sie ist zudem mit passiven Sicherheitselementen zum Schutz der Fahrerkabine 12 und des darin befindlichen Fahrers, wie einem Bügelsystem nach Art eines Überrollschutzes, ausgestattet

Um die Steuerung des Containertransportfahrzeugs 10 durch einen Fahrer aus der Fahrerkabine 12 heraus zu ermöglichen, ist in dieser also ein Kontrollsystem 13 für den bemannten Betrieb angeordnet Damit dieses auf das Containertransportfahrzeug 10 einwirken kann, ist eine Schnittstelle 15 für den Anschluss an die Fahrzeugsteuerung vorgesehen, über die die Fahrerkabine 12 per steckbarer Kabelverbindung 16 an das Containertransportfahrzeug 10 bei ihrer Montage angeschlossen wird.

Wird das Containertransportfahrzeug 10 fahrerlos im reinen Automatik-Betrieb verwendet, kann die Fahrerkabine 12 entfernt werden.

Das fahrerlos oder bemannt betreibbare flurgebundene Containertransportfahrzeug 10 besitzt also für den fahrerlosen Betrieb ein mit einem in Wirkverbindung mit dem Fahrantrieb und/oder der Lenkung und/oder der Bremsanlage bnngbares Steuersystem, das Mittel zum Eingeben und Speichern von möglichen Fahrtrouten und einer Transportaufgabe, Mittel zum automatischen Bestimmen der Fahrzeugposition im Raum, Mittel zur Steuerung der Bewegung des Containertransportfahrzeugs 10 in Abhängigkeit von dessen Position im Raum und von der vorgegebenen Transportaufgabe und Mittel zum Abbremsen des Containertransportfahrzeugs 10 beim Vorhandensein von Hindernissen aufweist.

Zusätzlich ist das Containertransportfahrzeug 10 für den bemannten Betrieb mit einer Fahrerkabine 12 mit einem Kontrollsystem 13 für die Lenkung, die Bewegungssteuerung und das Bremsen im bemannten Betrieb versehen.

### Bezugszeichenliste

- 1: Kai
- 2: Containerbrücken
- 3: Containerlager
- 4: Lagergassen
- 5: erste Portalkrane
- 6: Übergabeplätze
- 7: zweite Portalkrane
- 8: Übergabeplätze
- 9: Schienenstrecke
- 10: Containertransportfahrzeug
- 11: Sicherheitsschleuse
- 12: Fahrerkabine
- 13: Kontrollsystem
- 14: vorderes Ende
- 15: Schnittstelle
- 16: Kabelverbindung

- A: Automatik-Bereich
- B: Manuell-Bereich

## Patentansprüche

1. System für den Umschlag von Containern, in dem flurgebundene, gummibereifte und fahrerlose Containertransportfahrzeuge (10) und flurgebundene, gummibereifte und bemannte Containertransportfahrzeuge (10) eingesetzt sind, die Container zwischen Containerbrücken (2) und einem Containerlager (3) transportieren,
**dadurch gekennzeichnet, dass** mindestens ein Manuell-Bereich (B) vorgesehen ist, in dem nur flurgebundene, gummibereifte und bemannte Containertransportfahrzeuge (10) eingesetzt sind, dass mindestens ein Automatik-Bereich (A) vorgesehen ist, in dem nur flurgebundene, gummibereifte und fahrerlose Containertransportfahrzeuge (10) eingesetzt sind, wobei jedes der Containertransportfahrzeuge (10) wahlweise fahrerlos oder bemannt betreibbar ist und somit wahlweise in dem Automatik-Bereich (A) oder dem Manuell-Bereich (B) verfahrbar ist, sowie der Automatik-Bereich (A) und der Manuell-Bereich (B) örtlich voneinander getrennt sind.

2. System nach Anspruch 1, **dadurch gekennzeichnet, dass** der Automatik-Bereich (A) gegen den Zutritt von Personen geschützt ist.

3. System nach Anspruch 1 oder 2, **dadurch gekennzeichnet, dass** zwischen dem Automatik-Bereich (A) und dem Manuell-Bereich (B) eine Sicherheitsschleuse (11) angeordnet ist, um ein Einfahren von Fahrern mit Containertransportfahrzeugen (10) aus dem Manuell-Bereich (B) in den Automatik-Bereich (A) zu verhindern.

4. System nach einem der Ansprüche 1 bis 3, **dadurch gekennzeichnet, dass** in dem Automatik-Bereich (A) und dem Manuell-Bereich (B) jeweils Containertransporteinrichtungen eingesetzt sind, die im Bereich der Containerbrücken (2) und/oder des Containerlagers (3) zum Be- und Entladen der Containertransportfahrzeuge (10) Container aufnehmen und abgeben.

5. System nach Anspruch 4, **dadurch gekennzeichnet, dass** jede der Containertransporteinrichtungen wahlweise fahrerlos oder bemannt betreibbar ist.

6. System nach Anspruch 4, **dadurch gekennzeichnet, dass** im Bereich der Containerbrücken (2) und/oder des Containerlagers (3) die Container selbsttätig von den Containertransportfahrzeugen (10) aufnehmbar und abgebbar sind.

7. System nach einem der Ansprüche 1 bis 6, **dadurch gekennzeichnet, dass** die flurgebundenen Containertransportfahrzeuge (10) AGVs sind, die mittels einer Hilfseinrichtung bemannt betreibbar sind.

8. System nach Anspruch 7, **dadurch gekennzeichnet, dass** die Hilfseinrichtung eine Fahrerkabine (12) umfasst, die mit einem Kontrollsystem (13) für die Lenkung, die Bewegungssteuerung und das Bremsen im bemannten Betrieb versehen ist.

9. System nach Anspruch 8, **dadurch gekennzeichnet, dass** die Hilfseinrichtung über eine Sicherheitsschaltung aktivierbar ist.

10. System nach Anspruch 8 oder 9, **dadurch gekennzeichnet, dass** die Fahrerkabine (12) an der vorderen Stirnseite (14) des flurgebundenen Containertransportfahrzeugs (10) lösbar befestigt ist.

11. System nach einem der Ansprüche 8 bis 10, **dadurch gekennzeichnet, dass** das Kontrollsystem (13) für den bemannten Betrieb eine Schnittstelle (15) für den Anschluss an die Fahrzeugsteuerung des AGVs aufweist und das Kontrollsystem (13) ausgestaltet ist, um nach der Aktivierung in die Fahrzeugsteuerung des AGVs einzugreifen und diese zu übernehmen.

## Claims

1. System for handling containers in which use is made of driverless, ground-borne, rubber-tyred container transport vehicles (10) and manned, ground-borne, rubber-tyred container transport vehicles (10), which transport containers between container-handling gantry cranes (2) and a container storage area (3), **characterised in that** there is provided at least one manual region (B) in which only manned, ground-borne, rubber-tyred container transport vehicles (10) are used, and **in that** there is provided at least one automatic region (A) in which only driverless, ground-borne, rubber-tyred container transport vehicles (10) are used, each of the container transport vehicles (10) being able to be operated in a driverless or manned manner as desired and thus being able to be displaced in the automatic region (A) or the manual region (B) as desired, and the automatic region (A) and the manual region (B) being separated from one another in position.

2. System according to claim 1, **characterised in that** the automatic region (A) is protected against the entry of persons.

3. System according to claim 1 or 2, **characterised in that** a multi-gate security system (11) is arranged between the automatic region (A) and the manual region (B) to prevent drivers driving container transport vehicles (10) from driving from the manual region (B) into the automatic region (A).

4. System according to one of claims 1 to 3, **characterised in that** use is made in both the automatic region (A) and the manual region (B) of container transport means which, in the region of the container-handling gantry cranes (2) and/or the container storage area (3), receive and release containers to load and unload the container transport vehicles (10).

5. System according to claim 4, **characterised in that** each of the container transport means can be operated in a driverless or manned manner as desired.

6. System according to claim 4, **characterised in that** the containers can be received and released automatically by the container transport vehicles (10) in the region of the container-handling gantry cranes (2) and/or the container storage area (3).

7. System according to one of claims 1 to 6, **characterised in that** the ground-borne container transport vehicles (10) are AGV's which, by means of an auxiliary facility, can be operated in a manned manner.

8. System according to claim 7, **characterised in that** the auxiliary facility comprises a driver's cab (12) which is provided with a controlling system (13) for steering, for the control of movement, and for braking, in manned operation.

9. System according to claim 8, **characterised in that** the auxiliary facility can be activated via a safety and security circuit.

10. System according to claim 8 or 9, **characterised in that** the driver's cab (12) is releasably fastened to the front end-face (14) of the ground-borne container transport vehicle (10).

11. System according to one of claims 8 to 10, **characterised in that** the controlling system (13) for manned operation has an interface (15) for connection to the control system of the AGV, and the controlling system (13) is designed, on being activated, to intervene in the control system of the AGV and to take over responsibility for control thereof.

## Revendications

1. Système de transbordement de conteneurs dans lequel l'on utilise des véhicules de transport de conteneurs (10) sans conducteur, situés au sol et montés sur pneumatiques, et des véhicules de transport de conteneurs (10) avec conducteur, situés au sol et montés sur pneumatiques, qui transportent des conteneurs entre des ponts gerbeurs de conteneurs (2) et une zone de stockage de conteneurs (3), **caractérisé en ce qu'**il est prévu au moins une zone manuelle (B) dans laquelle l'on n'utilise que des véhicules de transport de conteneurs (10) avec conducteur, situés au sol et montés sur pneumatiques, et **en ce qu'**il est prévu au moins une zone automatique (A) dans laquelle l'on n'utilise que des véhicules de transport de conteneurs (10) sans conducteur, situés au sol et montés sur pneumatiques, chacun des véhicules de transport de conteneurs (10) pouvant être piloté au choix sans ou avec conducteur et donc déplacé au choix dans la zone automatique (A) ou la zone manuelle (B), et la zone automatique (A) et la zone manuelle (B) étant spatialement séparées l'une de l'autre.

2. Système selon la revendication 1, **caractérisé en ce que** la zone automatique (A) est protégée contre l'accès de personnes.

3. Système selon la revendication 1 ou 2, **caractérisé en ce qu'**un sas de sécurité (11) est disposé entre la zone automatique (A) et la zone manuelle (B) afin d'empêcher le passage de véhicules de transport de conteneurs (10) avec conducteur de la zone manuelle (B) dans la zone automatique (A).

4. Système selon l'une quelconque des revendications 1 à 3, **caractérisé en ce que** des dispositifs de transport de conteneurs sont utilisés dans la zone automatique (A) et dans la zone manuelle (B), lesquels réceptionnent et délivrent des conteneurs au niveau des ponts gerbeurs de conteneurs (2) et/ou de la zone de stockage de conteneurs (3) afin de charger et décharger les véhicules de transport de conteneurs (10).

5. Système selon la revendication 4, **caractérisé en ce que** chacun des dispositifs de transport de conteneurs peut être piloté au choix avec ou sans conducteur.

6. Système selon la revendication 4, **caractérisé en ce que** au niveau des ponts gerbeurs de conteneurs (2) et/ou de la zone de stockage de conteneurs (3) les conteneurs peuvent être réceptionnés ou délivrés automatiquement par les véhicules de transport de conteneurs (10).

7. Système selon l'une des revendications 1 à 6, **caractérisé en ce que** les véhicules de transport de conteneurs (10), situés au sol, sont des AGV qui peuvent être pilotés avec conducteur via un dispositif auxiliaire.

8. Système selon la revendication 7, **caractérisé en ce que** le dispositif auxiliaire comporte une cabine de conducteur (12) qui est équipée d'un système de commande (13) destiné à diriger, commander le déplacement et freiner dans le mode de fonctionnement avec conducteur.

9. Système selon la revendication 8, **caractérisé en ce que** le dispositif auxiliaire peut être activé via un circuit de protection.

10. Système selon la revendication 8 ou 9, **caractérisé en ce que** la cabine de conducteur (12) est fixée de manière amovible à l'avant (14) du véhicule de transport de conteneurs (10) situé au sol.

11. Système selon l'une des revendications 8 à 10, **caractérisé en ce que** le système de commande (13) pour le pilotage avec conducteur comporte une interface (15) pour le raccordement à la commande de véhicule de l'AGV et le système de commande (13) est configuré pour intervenir après activation dans la commande de véhicule de l'AGV et de prendre en charge celle-ci.
